# DEMANDE DE BREVET EUROPEEN

(11) **EP 0 628 845 A1**
(43) Date de publication de la demande: **14.12.1994**
(21) Numéro de dépôt: 94401260.8
(22) Date de dépôt: 07.06.1994
(51) Int. Cl.: G02B 23/12

(54) **Jumelle de vision nocturne à imagerie électronique**

(30) Priorité: 11.06.1993 FR 9307048
(71) Demandeur: EPREST ELECTRONIQUE PROFESSIONNELLE DE L'EST, F-54300 Luneville (FR)
(72) Inventeur: Le Bris, Didier, F-92402 Courbevoie Cédex (FR); Maigre, Pierre, F-92402 Courbevoie Cédex (FR)
(74) Mandataire: Lincot, Georges

(57) **Abrégé**

La jumelle de vision nocturne selon l'invention comporte un système optique de projection d'un flux lumineux incident composé d'un objectif (5) couplé à un tube intensificateur de lumière (6) lui-même couplé, à travers un interface réducteur d'image (8), à des moyens de détection (7) se présentant sous forme matricielle.

La jumelle peut se présenter sous forme de deux modules emboîtables l'un dans l'autre, un module corps de jumelle (1) et un module viseur binoculaire (2).

Application à la vision nocturne par imagerie électronique avec incrustation d'informations additionnelles.

## Description

Le domaine de l'invention se rapporte à la visualisation de scènes ou de paysage, plus particulièrement en vision nocturne, en mettant en oeuvre des moyens facilement manipulantes et transportables du genre jumelle.

Traditionnellement, l'observation d'un paysage se fait, dans les conditions évoquées, à l'aide d'une longue vue, d'un périscope, ou de jumelles qui sont appréciées pour leur qualité de luminosité.

Plus récemment, des dispositifs de visualisation du type tête haute sont apparus. Ces dispositifs permettent de superposer à l'image optique une autre image affichant dans le viseur des informations complémentaires (relatives par exemple au temps écoulé, à la localisation sur une carte, à des numéros de référence, etc...) liés à l'image optique. Les indications additionnelles proviennent généralement d'un tube cathodique ou d'un écran à cristaux liquide et sont transmises par fibres optiques et/ou à travers des éléments optiques adaptés (miroir, lentille, miroir semi-réfléchissant, etc...) jusqu'à l'axe optique principal du viseur. Un tel montage est par exemple décrit dans le brevet US 4 915 487. Dans ce document, les informations additionnelles sont portées sur l'une des deux voies optiques d'une paire de jumelles. Pour la vision nocturne, il est prévu classiquement l'activation d'un tube intensificateur de lumière. De façon générale, les systèmes optiques jour/nuit, tels que périscopes, épiscopes, etc..., comportent de tels tubes intensificateurs de lumière disposés dans une voie optique éventuellement commutable (voir par exemple le brevet FR. 2 578 062).

Par ailleurs, il est connu, notamment du brevet GB 2 149 141, des dispositifs d'observation jour/nuit intégrant une imagerie infrarouge pour la vision de nuit. De tels systèmes offrent l'avantage de fournir une image de qualité très supérieure à celle fournie avec les seuls intensificateurs de lumière.

Cependant, les systèmes à imagerie infrarouge sont encombrants, peu maniables, et complexes.

L'invention propose, au contraire, un dispositif de vision nocturne à imagerie électronique facilement transportable et manipulable par la mise en oeuvre de mouvements naturels.

L'invention est basée sur la mise en oeuvre d'un agencement particulier d'éléments dans un dispositif compact de type jumelle permettant la visualisation, à travers l'oculaire de ce dispositif, d'une image électronique de la scène observée à l'aide d'un objectif de ce dispositif.

Plus précisément, l'objet de l'invention concerne une jumelle de vision nocturne à imagerie électronique, comportant un système optique de projection sur des moyens de détection d'un flux lumineux incident provenant d'une scène observée, caractérisé en ce que le système optique comporte un objectif couplé à un tube intensificateur de lumière lui-même couplé, à travers un interface réducteur d'image, auxdits moyens de détection caractérisée en ce qu'elle comporte au moins un moyen de visualisation d'une image de ladite scène formée à partir d'un signal vidéo délivré par les moyens de détection, et transmise à des moyens oculaires

Selon un mode de réalisation préférée, le dispositif selon l'invention se présente sous la forme d'une paire de jumelles modulaire, constituée de deux modules pouvant s'emboîter l'un dans l'autre, un module corps de jumelle et un module viseur.

Selon une caractéristique préférée, l'interface réducteur est composé d'un faisceau conique de fibres optiques dont les extrémités sont collées d'une part, sur la fibre de sortie du tube intensificateur de lumière et d'autre part, sur la matrice de détection. La matrice de détection est de préférence de type à couplage de charges connue sous l'appellation CCD (initiales de Charges Coupled Device en terminologie anglo-saxonne).

Avantageusement, les moyens de visualisation de la scène obtenue à partir du signal délivré par la matrice CCD sont constitués par un microtube cathodique ou par un dispositif d'affichage à cristaux liquides. Selon un exemple de réalisation, il est possible d'utiliser un seul dispositif de visualisation couplé à une combinaison optique de manière à former une image sur chacune des voies optiques du viseur binoculaire ou, selon un autre exemple de réalisation, d'utiliser un dispositif de visualisation par voie optique du viseur.

Il est également avantageux de tirer profit de la mise en oeuvre de moyens de formation d'une image électronique, pour y incruster des informations complémentaires (délivrées par un compas électronique, télémètre, dateur, etc...). L'incrustation est réalisée à partir de cartes de traitement du signal vidéo, incorporées dans le corps de jumelle.

D'autres avantages et caractéristiques apparaîtront à la lecture de la description qui suit, faite en référence aux figures annexées qui représentent, respectivement :
- la figure 1, un premier exemple de réalisation sous forme modulaire du dispositif selon l'invention présenté en vue éclatée ;
- la figure 2, une vue en coupe du dispositif selon la figure 1, après emboîtement des modules ;
- la figure 3, une vue de dessus d'un système de duplication optique schématisé du viseur binoculaire ;
- la figure 4, un autre exemple de réalisation du dispositif selon l'invention en vue éclatée ;
- la figure 5, une vue en coupe du dispositif selon la figure 3, après montage ;
- la figure 6, une vue en perspective cavalière du dispositif selon l'invention.

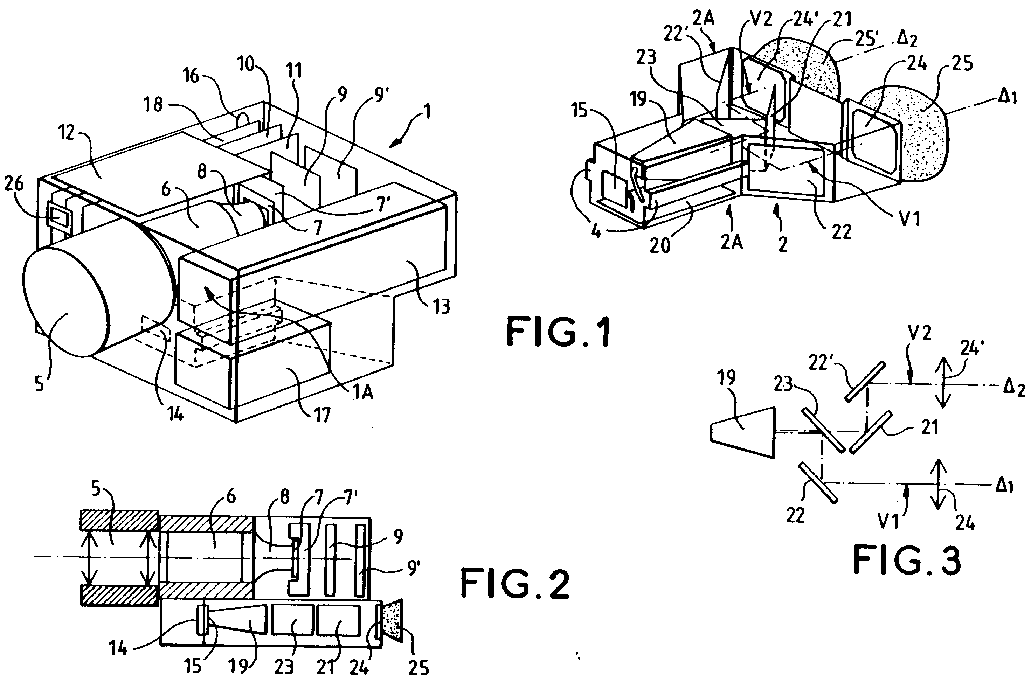

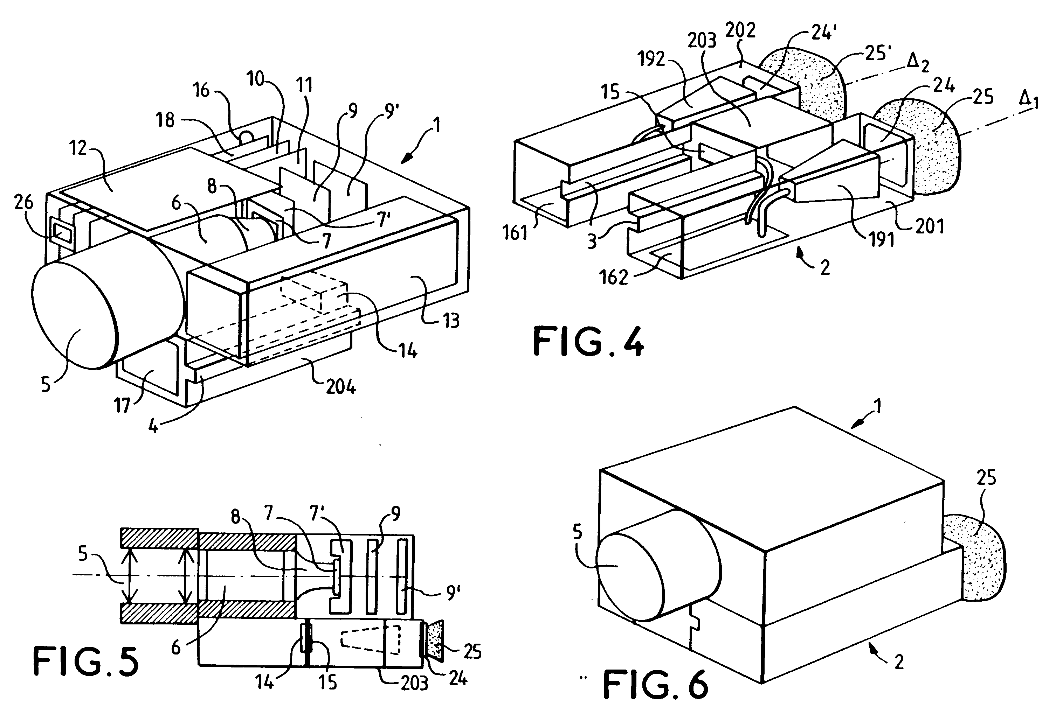

Sur les figures 1 et 4, le dispositif selon l'invention est partiellement transparent de manière à laisser apparaître ses éléments constitutifs.

Les figures 1 à 3 représentent un exemple de réalisation de l'invention sous forme de structure modulaire, respectivement en vue éclatée avant montage, et en coupe après emboîtement des deux modules constitutifs : un corps de jumelle 1 de forme sensiblement parallélépipédique et un viseur binoculaire 2, emboîtables l'un dans l'autre. Ces moyens d'emboîtement sont constitués par exemple de nervures 3 et de glissières 4, disposées respectivement dans un logement 1A du corps 1 et sur une avancée 2A du viseur 2.

Le corps de jumelle 1 comprend un objectif interchangeable 5, couplé optiquement à un tube intensificateur de lumière 6, dont la photocathode coïncide avec le plan focal de l'objectif 5. Le tube 6 est conjugué optique d'un détecteur matriciel 7, enchâssé dans une structure de support 7' par l'intermédiaire d'un interface réducteur d'image 8. L'interface réducteur est couplé, par exemple par collage, entre la sortie du tube 6 et le détecteur matriciel 7.

A titre d'exemple :
- l'interface réducteur d'image peut être constitué par un faisceau conique de fibres optiques ordonnées de 6 µm de diamètre, son diamètre d'entrée étant de 18,5 mm et son diamètre de sortie de 8,4 mm ;
- le tube intensificateur de lumière peut être un tube à microcanaux connu en soi, présentant une sortie à fibre optique plane de diamètre adapté à celui du faisceau réducteur ;
- la matrice détectrice est une des matrices à transfert de charges de type CCD d' 1/2 pouce, par exemple celles vendues sous la marque "SONY" et présentant une résolution de 500 x 582 pixels ou 752 x 582 pixels.

La matrice de détection 7 délivre un signal qui est appliqué à une ou des cartes électroniques 9 et 9'. L'utilisation d'une telle carte est classique et se retrouve par exemple dans les caméras CCD. Cette carte met sous forme de signal vidéo adapté aux normes standards existantes, les informations fournies en sortie de la matrice de détection. La carte peut également comporter, de manière connue en soi, des adaptations d'alimentation et de signaux d'horloge pour la matrice de détection et le fonctionnement interne de la carte.

Le signal vidéo standard issu de la carte 9 ou 9'est appliqué à des cartes de traitement vidéo 10 et 11. Ces cartes réalisent, sur commande de l'opérateur, des incrustations vidéo. Ces incrustations fournissent des informations provenant de divers éléments : par exemple un compas électronique 12, un télémètre 13, et/ou un dateur, ce dernier étant intégré à une des cartes de traitement vidéo. Des traitements complémentaires classiques du signal, tels que filtrages, sont également être intégrés à l'une des cartes de traitement 10 ou 11.

Le signal vidéo ainsi traité est communiqué au module viseur par l'intermédiaire de deux demi-connecteurs, respectivement 14 sur le boîtier de jumelle, et 15 sur le module viseur, réalisant une connexion par enfichage lors du montage de la jumelle. Le signal vidéo traité est également disponible sur une fiche de sortie 16 pour être avantageusement appliqué à des périphériques, tels que moniteurs auxiliaires ou enregistreurs vidéo. Cette application permet à d'autres opérateurs, de suivre sur des moniteurs auxiliaires la scène observée à travers les jumelles par un premier opérateur.

De manière connue, I'énergie électrique est fournie par une source 17 (batterie, accumulateur ou adaptateur) intégrable dans le boîtier du corps de jumelle. Un carte électronique 18 sert, de manière également connue en soi, à générer les tensions nécessaires au fonctionnement de l'ensemble de la jumelle. Des dispositifs de fixation peuvent également être disposés sur le boîtier (dispositif de fixation sur pieds, dispositif de fixation pour attache frontale ou pour courroie de transport).

Le module viseur binoculaire 2 comporte, dans l'exemple de réalisation illustrée par la figure 1, un dispositif de visualisation électronique 19 relié au demi-connecteur 15 par l'intermédiaire d'une carte électronique 20. Ce dispositif de visualisation peut être un microtube cathodique, comme illustré, ou un écran de visualisation à cristaux liquides de dimensions adaptées. La carte électronique 20 adapte, selon des procédures connues, le signal vidéo provenant du demi-connecteur 15 au dispositif de visualisation 19 utilisé.

L'image fournie par le dispositif de visualisation 19 est dupliqué de manière à être optiquement transmise selon deux voies de transmission V1 et V2 d'axes Δ1 et Δ2 disposées dans deux ailes latérales 2C et 2B. La duplication est réalisée, dans l'exemple illustré, par une combinaison optique comportant trois miroirs 21, 22 et 22' et une lame séparatrice 23. D'autres moyens (par exemple des fibres optiques) peuvent être utilisés pour réaliser cette duplication.

En sortie de chaque voie de transmission optique, un dispositif oculaire 24, 24', permet d'adapter l'image à la vue de l'opérateur. Le confort visuel peut être amélioré par la mise en place d'un oeilleton 25, 25', sur chaque voie optique.

Les figures 3 et 4 illustrent un autre exemple de réalisation sous forme modulaire du dispositif selon l'invention, respectivement en vue éclatée et en coupe après emboîtement des parties modulaires. Les éléments identiques des figures 1 et 4 portent les mêmes signes de référence. Ce deuxième exemple de réalisation, à structure également modulaire, diffère du premier en ce qu'il met en oeuvre un dispositif de visualisation électronique, 191 ou 192, sur chaque voie optique du viseur binoculaire : dans l'exemple de réalisation illustré, le viseur binoculaire 2 se présente sous la forme d'un boîtier comportant deux branches 201 et 202, chaque branche abritant une voie de transmission optique d'axe respectivement Δ1 et Δ2. Les branches sont reliées par un pontet 203 et s'enfichent dans le boîtier du corps de la jumelle 1 autour d'une embase centrale 204 de celui-ci, à l'aide de glissières et de rainures complémentaires 3 et 4, implantées respectivement et sur les branches 201 et 202 du viseur binoculaire 2 et sur l'embase 204.

Le signal vidéo est crée, délivré et traité de la même façon que dans l'exemple de réalisation déjà décrit. Il est transmis au module viseur binoculaire 2 à travers les deux demi-connecteurs 14 et 15, respectivement implantés dans l'embase 204 du corps de jumelle 1 et dans le pontet 203 du viseur 2. Le signal est alors transmis, à partir du demi connecteur 15, à deux cartes d'adaptation électronique 161 et 162, chacune de ces cartes étant implantées dans une branche, respectivement 201 et 202, du viseur 2. Chaque carte, respectivement 161 et 162, adapte de manière connue le signal vidéo afin d'alimenter chaque dispositif de visualisation 191 et 192, disposé dans chacune des branches, respectivement 201 et 202, du viseur binoculaire.

La figure 5 représente une vue cavalière du dispositif selon l'invention, une fois le viseur binoculaire 2 emboîté dans le corps de jumelle 1. La forme ainsi obtenue se rapporte aussi bien à l'un ou à l'autre des exemples de réalisation précédemment décrits. L'objectif 5 est interchangeable. Des objectifs standards vidéo, de distances focales 25, 50 ou 75 mm peuvent être utilisés suivant la largeur du champ recherchée.

L'invention n'est pas limitée aux exemples de réalisation ci-dessus décrits et représentés. Par exemple, un dispositif d'éclairage d'appoint 26 commandé par l'utilisateur peut être intégré au corps de jumelle (comme montré sur les figures 1 et 4) ou au viseur. Ce dispositif peut être constitué par une source à diode électroluminescente (LED) infrarouge pour servir à l'éclairage à courte distance (permettant la lecture de cartes par exemple).

Il est par ailleurs possible de réaliser le dispositif selon l'invention sous une forme monobloc, le viseur binoculaire étant totalement solidaire au corps de jumelle. D'autres adaptations, à la portée de l'homme de l'art sont également possible : l'obtention d'une image électronique en relief en utilisant deux combinaisons / objectif-intensificateur de lumière-matrice de détection / à la place d'un seul, une combinaison étant associée à chacune des voies optiques du viseur binoculaire. L'interface réducteur peut être réalisé, d'autre part, à l'aide d'un système optique, par exemple un système optique, anamorphoseur adapté en dimension. Une version simplifiée peut être également mise en oeuvre en utilisant un viseur monooculaire associé à un seul dispositif de visualisation électronique.

## Revendications

**1** **-** Jumelle de vision nocturne à imagerie électronique, comportant un système optique (5, 6, 8) de projection sur des moyens de détection (7) d'un flux lumineux incident provenant d'une scène observée, caractérisé en ce que le système optique comporte un objectif (5) couplé à un tube intensificateur de lumière (6) lui-même couplé, à travers un interface réducteur d'image (8), auxdits moyens de détection caractérisée en ce qu'elle comporte au moins un moyen de visualisation d'une image de ladite scène formée à partir d'un signal vidéo délivré par les moyens de détection (7), et transmise à des moyens oculaires (24, 24').

**2** **-** Jumelle de vision nocturne selon la revendication 1, caractérisée en ce que le tube intensificateur de lumière (6) est un tube à microcanaux, et en ce que l'interface réducteur d'image (8) est un faisceau conique de fibres optiques.

**3** **-** Jumelle de vision nocturne selon la revendication 1, caractérisée en ce que le moyen de visualisation est un microtube cathodique (19, 191, 192).

**4** **-** Jumelle de vision nocturne selon la revendication 1, caractérisée en ce que le moyen de visualisation est un dispositif à cristaux liquides.

**5** **-** Jumelle de vision nocturne selon l'une des revendications précédentes, caractérisée en ce qu'elle comporte des cartes de traitement électronique (10, 11) du signal vidéo provenant des moyens de détection (7).

**6** **-** Jumelle de vision nocturne selon la revendication 5, caractérisée en ce que les cartes de traitement (10, 11) reçoivent des signaux délivrés par un compas électronique (12) et/ou un télémètre (13) et/ou un dateur pour incruster des informations dans les moyens de visualisation.

**7** **-** Jumelle selon l'une des revendications précédentes, caractérisée en ce que le signal vidéo provenant des moyens de détection (7) est appliqué à une fiche de sortie (16) pour être transmis à des dispositifs auxiliaires d'enregistrement, tel que magnétoscope, et/ou de visualisation, tel que moniteur.

**8** **-** Jumelle de vision nocturne selon l'une des revendications précédentes, caractérisée en ce qu'il se compose de deux modules emboîtables l'un dans l'autre, un module corps de jumelles (1) comprenant le système optique de projection et les moyens de détection, et un module viseur binoculaire (2) comprenant les moyens de visualisation de la scène observée, les deux modules formant après montage une paire de jumelles.

**9** **-** Jumelle de vision nocturne selon la revendication 8, caractérisée en ce que le module corps de jumelle comporte un demi-connecteur (14) et le module viseur binoculaire un demi-connecteur complémentaire (15), le demi-connecteur (14) délivrant un signal vidéo de sortie pour que le module corps de jumelle (1) soit connecté au module viseur binoculaire (2), les deux demi-connecteurs (14, 15) étant enfichables l'un dans l'autre lors du montage des deux modules pour transmettre le signal vidéo délivré par les moyens de détection aux moyens de visualisation.

**10** **-** Jumelle de vision nocturne selon l'une des revendications 8 ou 9, caractérisée en ce que le module corps de jumelle (1) présente un logement (1 A) pour recevoir une avancée (2A) du module viseur binoculaire (2), et en ce que le viseur binoculaire (2) comporte un seul moyen de visualisation (19) couplé à des moyens de duplication optique (21 à 23) pour former deux voies de transmission optique (V1, V2) disposées dans deux ailes (2B, 2C) du module viseur (2), l'image visualisée par le moyen de visualisation étant alors observée par deux dispositifs oculaires (24, 24'), un dispositif oculaire étant situé à l'extrémité de chaque aile.

**11** **-** Jumelle de vision nocturne selon l'une des revendications 8 ou 9, caractérisée en ce que le module corps de jumelle (1) présente une embase (204) pour recevoir chacune des deux branches (201, 202) du module viseur binoculaire (2) reliées par un pontet (203), et en ce que le viseur binoculaire (2) comporte deux moyens de visualisation (191, 192), un moyen de visualisation étant disposé dans chaque branche (201, 202), les images visualisées par les moyens de visualisation étant alors observées par des dispositifs oculaires (24, 24') situés aux extrémités des branches (201, 202).
